## Europäisches Patentamt
## European Patent Office
## Office européen des brevets

(19)

(11) Veröffentlichungsnummer: **0 100 307**
**B1**

(12)

# EUROPÄISCHE PATENTSCHRIFT

(45) Veröffentlichungstag der Patentschrift:
19.03.86

(51) Int. Cl.⁴: **B 23 Q 39/04**, B 23 P 21/00

(21) Anmeldenummer: 83890125.4

(22) Anmeldetag: 27.07.83

(54) Automatisch betriebene Vorrichtung zum Zusammenbau, zum Messen, zum Bearbeiten od. dgl. von Arbeitsstücken.

(30) Priorität: 27.07.82 AT 2897/82

(43) Veröffentlichungstag der Anmeldung:
08.02.84 Patentblatt 84/6

(45) Bekanntmachung des Hinweises auf die Patenterteilung:
19.03.86 Patentblatt 86/12

(84) Benannte Vertragsstaaten:
CH DE IT LI SE

(56) Entgegenhaltungen:
DE - A - 2 827 480
DE - B - 1 112 362
DE - B - 2 331 907
FR - A - 1 354 571

Fachlehrbuch "Getriebetechnik", Prof. J. Volmer, VEB
Verlag Technik, 1979 S. 405, 411, 412, 440

(73) Patentinhaber: Nessmann Maschinen KG, Pischeldorfer
Strasse 20, A-9020 Klagenfurt Kärnten (AT)

(72) Erfinder: Nessmann, Friedrich, Gerlitzenweg 10,
A-9020 Klagenfurt (AT)

(74) Vertreter: Beer, Otto, Dipl.-Ing. et al, Lindengasse 8,
A-1071 Wien (AT)

LIBER, STOCKHOLM 1986

## Beschreibung

Die Erfindung betrifft eine automatisch betriebene Vorrichtung zum Zusammenbau, zum Messen, zum Bearbeiten od. dgl. von Arbeitsstücken unter Verwendung eines Drehtisches und von Manipulatoren oder Bearbeitungseinheiten, die mittels Nockenscheiben angetrieben werden, wobei der Drehtisch mit Trägern für Arbeitsstücke bestückt ist und die rund um den Drehtisch vorgesehenen Manipulatoren oder Bearbeitungseinheiten auf einem Tisch angeordnet sind und ein Getriebe zum schrittweisen Antrieb des Drehtisches und zum Antrieb der Manipulatoren oder Bearbeitungseinheiten vorgesehen ist, wobei die Manipulatoren oder Bearbeitungseinheiten mit einem Getriebe mittelbar über einen austauschbaren Zahnrad-Zahnriementrieb od. dgl. gekuppelt sind und der Zahnriemen od. dgl. einstückig durchlaufend ausgebildet ist und vorzugsweise über sämtliche Manipulatoren oder Bearbeitungseinheiten verläuft.

Bei bisher bekanntgewordenen Vorrichtungen dieser Art (DE-A1-28 27 480 und DE-B2-23 31 907) wird der Drehtisch über ein Schrittschaltgetriebe unmittelbar angetrieben. Dabei sind Teilungen von vier bis sechszehn üblich. Bei der DE-A1-28 27 480 erfolgt der Antrieb des Drehtisches direkt von einer Kurvenscheibe aus, wobei bei einer Änderung der Stationenzahl sowohl die Indexscheibe als auch die Abnahmerollen am Drehteller geändert werden müssen.

Aufgabe dieser Erfindung ist es die Stationenzahl einer solchen Vorrichtung verändern zu können ohne daß dabei das Schrittschaltgetriebe mitverändert werden muß.

Diese Aufgabe wird durch die Erfindung dadurch gelöst, daß der Drehtisch mit einem im Getriebe enthaltenen Schrittgetriebe mittelbarüber einen weiteren, zum Ändern des Schrittwinkels austauschbaren Zahnrad-Zahnriementrieb od. dgl. gekuppelt ist. Durch den erfindungsgemäß vorgesehenen mittelbaren Antrieb des Drehtisches über einen austauschbaren Zahnrad-Zahnriementrieb kann auf einfachere Art als bei der Vorrichtung gemäß der DE-A1-28 27 480 der Antrieb bei einer Änderung der Stationenzahl angepaßt werden. Es genügt ein einfach durchzuführender Austausch des Zahnrad-Zahnriementriebes. Ein Austausch des Indexgetriebes ist dabei nicht notwendig.

Nach einer vorzugsweisen Ausführungsform der Erfindung ist vorgesehen, daß der weitere Zahnrad-Zahnriementrieb od. dgl. als Untersetzungsgetriebe mit Vorspannung ausgebildet ist. Diese Ausbildung gestattet einerseits eine spielfreie Übertragung und eine erhöhte Genauigkeit bei der Einstellung des Schrittschalttisches, da das Spiel im Indexgetriebe verkleinert wird.

Die Erfindung erstreckt sich ferner darauf, daß die Manipulatoren oder Bearbeitungseinheiten auf dem Tisch um eine lotrechte,-zwischen dem Zahnrad-Zahnriementrieb und einem die Nockenscheiben antreibenden Nockengetriebe angeordnete Zwischenwelle drehbar und in der eingestellten Lage feststellbar angeordnet sind. Diese Ausgestaltung der erfindungsgemäßen Vorrichtung ermöglicht eine Veränderung der Winkelstellung der Manipulatoren oder Bearbeitungseinheiten über einen Bereich von 360° durch Verdrehen um die lotrechte Achse. Somit wird für die Manipulatoren oder Bearbeitungseinheiten ein weiterer Freiheitsgrad für ihre Einstellung gegenüber dem Drehtisch geschaffen.

Die Erfindung sieht weiterhin vor, daß eine die Nockenscheiben tragende Nockenwelle vorgesehen ist, welche horizontal ausgerichtet und radial ausbaubar angeordnet ist. Dadurch ergeben sich große Zeiteinsparungen bei der Einstellung der Vorrichtung bei der Inbetriebnahme sowie bei Ausbesserungsarbeiten.

Schließlich ist gemäß der Erfindung vorgesehen, daß zur Übertragung von Bewegungen von den den Manipulatoren oder Bearbeitungseinheiten zugeordneten Nockenscheiben zu den Bewegungsaufsätzen, welche die auf dem Drehtisch angeordneten Träger für die Arbeitsstücke bedienen, Hebelgestänge und Schubstangen vorgesehen sind, wobei zur Hubverstellung die wirksame Länge der Schubstangen z. B. durch Einstellschrauben veränderbar ist. Damit ist eine einfache Bewegungsübertragung von den Manipulatoren oder Bearbeitungseinheiten auf die Bewegungsaufsätze möglich, wobei umständliche Übertragungsgestänge eingespart und Einstellarbeiten vereinfacht werden können.

Einzelheiten der Erfindung werden anhand der Zeichnung erläutert, auf der eine beispielsweise Ausführungsform der erfindungsgemäßen Vorrichtung schematisch veranschaulicht ist. Es zeigt:

Figur 1 eine Draufsicht auf die Vorrichtung,

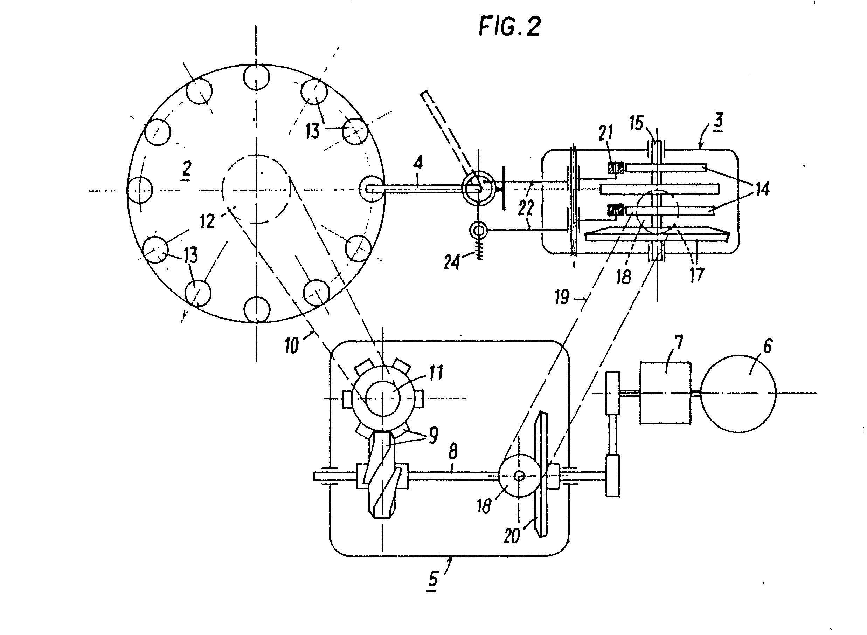

Figur 2 eine Einzelheit eines Antriebes der Vorrichtung in Draufsicht und

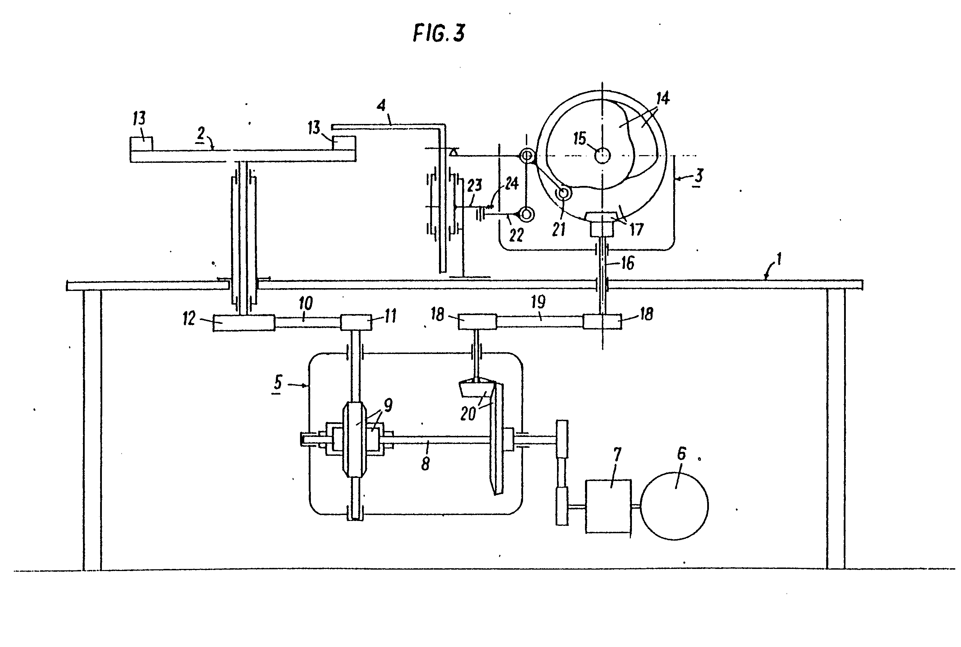

Figur 3 eine Seitenansicht zu Figur 2.

Gemäß dem dargestellten Ausführungsbeispiel weist die erfindungsgemäße Vorrichtung einen Tisch 1 auf, auf dem drehbar ein Drehtisch/²gelagert ist, um den herum Manipulatoren oder Bearbeitungseinheiten 3, 3ᴵ, 3ᴵᴵ, 3ᴵᴵᴵ, 3ᴵⱽ, 3ⱽ, 3ⱽᴵ und 3ⱽᴵᴵ angeordnet sind. Zwischen diesen und dem Drehtisch 2 sind Bewegungsaufsätze 4 vorgesehen.

Zum Antrieb des Drehtisches 2 ist in einem Getriebe 5 ein von einem Motor 6 über ein Übersetzungs- oder ein Regelgetriebe 7 und eine Hauptwelle 8 angetriebenes Schrittgetriebe 9 vorgesehen. Dieses versetzt den Drehtisch 2 in eine absatzweise Drehbewegung. Bei einer Umdrehung der Hauptwelle 8 um 360° schaltet das Schrittgetriebe 9 um eine Station weiter. Der Schaltwinkel des Schrittgetriebes 9, bezogen auf die Hauptwelle 8, beträgt 90 bis 150°. Der Antrieb des Drehtisches 2 erfolgt mittelbar unter Zuhilfenahme eines Zahnriemens 10 einer Zahnkette oder ähnlichen Antriebsmitteln sowie von Zahnrädern 11 und 12, die so ausgelegt sind, daß die Flanken vorgespannt sind. Dadurch ist eine spielfreie Übertragung der Schrittbewegung vom Schrittgetriebe 9 zum Drehtisch 2 gewährleistet. Die Schrittzahl am Schrittgetriebe 9 wird so gewählt, daß auf jeden Fall eine Untersetzung ins Langsame zum Drehtisch 2 erfolgt. Das ist so zu verstehen: wenn z. B. das Schrittgetriebe 9 sechs Stationen aufweist und somit pro Schritt einen Winkel von 60° überfährt und eine Untersetzung von 2:1 zum Drehtisch 2 gegeben ist, so weist dieser zwölf Stationen auf und überfährt nur einen Winkel von 30° pro Schritt. Durch diese Anordnung wird die Einstellgenauigkeit am Drehtisch 2 erhöht, da ein bestehendes Spiel am Schrittgetriebe 9 durch das Untersetzungsverhältnis verkleinert wird. Weiters ist es durch die beschriebene Anordnung möglich, mit einem bestimmten Schrittgetriebe 9, z. B. sechs Stationen, eine veränderliche Stationenanzahl am Drehtisch 2 auszuführen, wobei lediglich die Zahnräder 11 und 12 ausgetauscht werden müssen.

Auf dem Drehtisch 2 sind Träger 13 zur Aufnahme von Arbeitsstücken angeordnet.

Die Manipulatoren oder Bearbeitungseinheiten 3, $3^I$, $3^{II}$ $3^{III}$ $3^{IV}$ $3^V$ $3^{VI}$ und $3^{VII}$ setzen sich aus einem Nockenantrieb mit den Nockenscheiben 14 und den Bewegungsaufsätzen 4 zusammen. Der Antrieb der horizontal liegenden Nockenwelle 15 erfolgt über eine vertikale Zwischenwelle 16 und ein Kegelradpaar 17. Der Antrieb der vertikalen Zwischenwelle 16 erfolgt vom Getriebe 5 aus über die Zahnräder 18 und einen horizontal laufenden Zahnriemen 19 über Kegelräder 20 im Getriebe 5.

Durch diese Anordnung ist es möglich, die Manipulatoren oder Bearbeitungseinheiten 3, $3^I$, $3^{II}$, $3^{III}$, $3^{IV}$, $3^V$ $3^{VI}$ und $3^{VII}$ in beliebiger Entfernung x-y und Lage (Drehung um die z-Achse) zum Drehtisch 2 anzubauen. Die Änderung der Winkellage der Manipulatoren oder Bearbeitungseinheiten 3, $3^I$, $3^{II}$, $3^{III}$, $3^{IV}$, $3^V$, $3^{VI}$ und $3^{VII}$ in der Höhe (z-Achse) läßt sich einfach durch Drehen um die lotrechte Zwischenwelle 16 erreichen. Somit ist beim erfindungsgemäßen System eine größt-mögliche Anpassungsfähigkeit gegeben, wie dies kein anderes System aufweist.

Der Nockenantrieb weist auf der Nockenwelle 15 eine Anzahl Nockenscheiben 14 auf, mit welchen die Bewegungen synchron zum Maschinentakt erzeugt werden und mit Rollen 21 auf Hebel 22 übertragen werden. Da die Nockenantriebe mit den Hebeln 22 über dem Tisch 1 angeordnet sind, sind zur Übertragung der Bewegungen zu den Bewegungsaufsätzen 4 lediglich Schubstangen 23 erforderlich. Es sind keine weiteren Hebel und sonstige komplizierte Gestänge, wie dies bei anderen Systemen der Fall ist, notwendig.

Der Anlenkpunkt der Schubstange 23 am Hebel 22 ist mittels Einstellschrauben 24 radial verstellbar und somit ist die jeweilige Hubgröße am Bewegungsaufsatz 4 genau einstellbar, ohne daß dazu der Nockenhub geändert werden muß. Ein weiterer Vorteil der Erfindung besteht darin, daß die Nockenwelle 15 aus dem Nockenantrieb radial ausgebaut werden kann. Die Arbeitsweise der Vorrichtung gemäß dem dargestellten und beschriebenen Ausführungsbeispiel ist folgende:

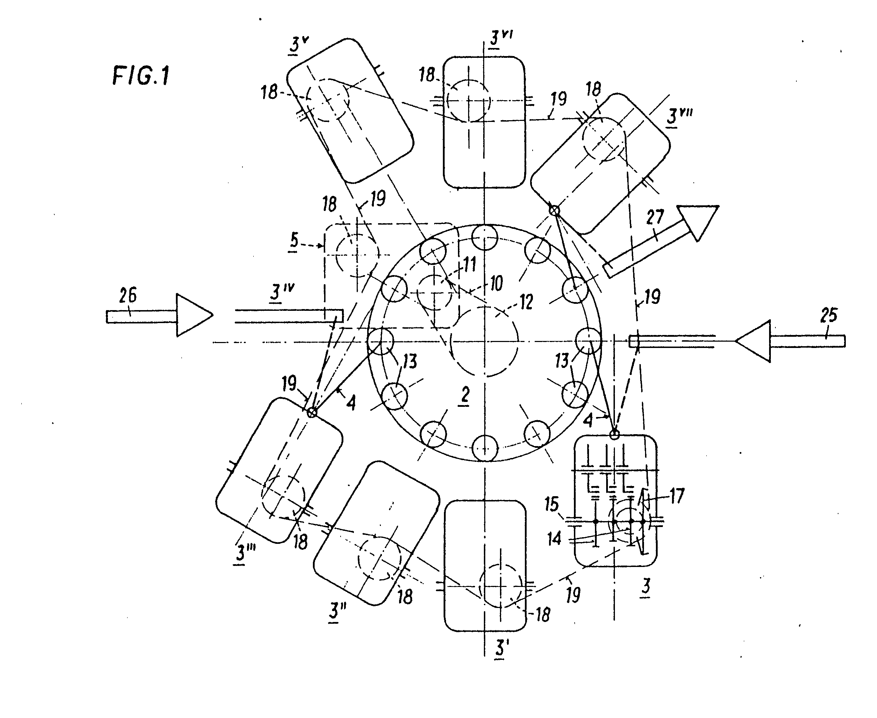

Mit dem Manipulator 3 und dem Bewegungsaufatz 4 werden Arbeitsstücke aus einer Zuführrinne 25 in die Träger 13 eingelegt. Mit den Manipulatoreinheiten $3^I$ und $3^{II}$ werden am Arbeitsstück Bearbeitungen durchgeführt. Mit der Manipulatoreinheit $3^{III}$ wird aus einer Zuführrinne 26 ein weiterer Teil zugeführt. Die Manipulatoreinheit $3^V$ fügt die beiden Teile zusammen, wobei mit der Manipulatoreinheit $3^{VI}$ eine Kontrolloperation durchgeführt werden kann. Mit der Manipulatoreinheit $3^{VII}$ wird das fertig montierte und kontrollierte Arbeitsstück in eine Rutsche 27 abgelegt. Aus Figur 1 ist zu ersehen, daß die Manipulatoren oder Bearbeitungseinheiten 3, $3^I$, $3^{II}$, $3^{III}$, $3^{VI}$, $3^V$, $3^{VI}$ und $3^{VII}$ sowohl tangential als auch radial in beliebigem Abstand vom Drehtisch 2 angeordnet sein können.

## Patentansprüche

1. Automatisch betriebene Vorrichtung zum Zusammenbau, zum Messen, zum Bearbeiten od. dgl. von Arbeitsstücken unter Verwendung eines Drehtisches (2) und von Manipulatoren oder Bearbeitungseinheiten (3, $3^I$ bis $3^{VII}$) die mittels Nockenscheiben (14) angetrieben werden, wobei der Drehtisch (2) mit Trägern (13) für Arbeitsstücke bestückt ist und die rund um den Drehtisch (2) vorgesehenen Manipulatoren oder Bearbeitungseinheiten (3, $3^I$ bis $3^{VII}$) auf einem Tisch (1) angeordnet sind und ein Getriebe (5) zum schrittweisen Antrieb des Drehtisches (2) und zum Antrieb der Manipulatoren oder Bearbeitungseinheiten (3, $3^I$ bis $3^{VII}$) vorgesehen ist, wobei die Manipulatoren oder Bearbeitungseinheiten (3, $3^I$ bis $3^{VII}$) mit einem Getriebe (5) mittelbar über einen austauschbaren Zahnrad-Zahnriementrieb od. dgl. (18, 19) gekuppelt sind und der Zahnriemen od. dgl. (19) einstückig durchlaufend ausgebildet ist und vorzugsweise über sämtliche Manipulatoren oder Bearbeitungseinheiten)3, $3^I$ bis $3^{VII}$) verläuft, dadurch gekennzeichnet, daß der Drehtisch (2) mit einem im Getribe (5) enthaltenen Schrittgetriebe (9) mittelbar über einen weiteren, zum Ändern des Schrittwinkels austauschbaren Zahnrad-Zahnriementrieb od. dgl. (10, 11, 12) gekuppelt ist.

2. Vorrichtung nach Anspruch 1, dadurch gekennzeichnet, daß der weitere Zahnrad-Zahnriementrieb (10, 11, 12) od. dgl. als Untersetzungsgetriebe mit Vorspannung ausgebildet ist.

3. Vorrichtung nach Anspruch 1, dadurch gekennzeichnet, daß die Manipulatoren oder Bearbeitungseinheiten (3, $3^I$ bis $3^{VII}$) auf dem Tisch (1) um eine lotrechte, zwischen dem Zahnrad-Zahnriementrieb (18, 19) und einem die Nockenscheiben (14) antreibenden Nockengetriebe (17) angeordnete Zwischenwelle (16) drehbar und in der eingestellten Lage feststellbar angeordnet sind.

4. Vorrichtung nach Anspruch 1 oder 3, dadurch gekennzeichnet, daß eine die Nockenscheiben (14) tragende Nockenwelle (15) vorgesehen ist, welche horizontal ausgerichtet und radial ausbaubar angeordnet ist.

5. Vorrichtung nach einem der Ansprüche 1 bis 4, dadurch gekennzeichnet, daß zur Übertragung von Bewegungen von den den Manipulatoren oder Bearbeitungseinheiten (3, 3$^I$ bis 3$^{VII}$) zugeordneten Nockenscheiben (14) zu den Bewegungsaufsätzen (4), welche die auf dem Drehtisch (2) angeordneten Träger (13) für die Arbeitsstücke bedienen, Hebelgestänge (22) und Schubstangen (23) vorgesehen sind, wobei zur Hubverstellung die wirksame Länge der Schubstangen (23) z. B. durch Einstellschrauben (24) veränderbar ist.

**Claims**

1. Automatically operated appliance for the assembling, measuring, processing, etc. of workpieces through the employment of a rotary table (2) and of manipulators or processing units (3, 3$^I$ to 3$^{VII}$), which are operated by means of cam discs (14), the rotary table being equipped with supports (13) for work pieces; and the manipulators or processing units (3, 3$^I$ to 3$^{VII}$) arranged around the rotary table (2) being mounted on a table (1); and a drive unit (5) for the purpose of a step-by-step drive of the rotary table (2) and for the drive of the manipulators or processing units (3, 3$^I$ to 3$^{VII}$) being provided; these manipulators or processing units (3, 3$^I$ to 3$^{VII}$) bein indirecty coupled with the drive unit (5) via an axchangeable cogwheel-tooth power belt drive, or the like, (18, 19); and the toothed power belt, or the like, (19) being designed in one continuons piece and preferably moving over all the manipulators or processing units (3$^I$ to 3$^{VII}$). and the appliance being characterized in that the rotary table (2) is coupled indirectly with a step-by-step gear (9) contained in the drive unit (5), by a further cogwheeltoothed power belt drive, or the like, (10, 11,12) that may be exchanged for the purpose of a change of the step angle.

2. Appliance according to Claim 1, characterized in that the further cogwheeltoothed power belt drive (10, 11, 12) or the like is designed as a speed-reducer drive with initial stress.

3. Appliance according to Claim 1, characterized in that the manipulators or processing units (3, 3$^I$ to 3$^{VII}$) are arranged on the table (1) around a vertical intermediate shaft (16), which is arranged between the cogwheeltoothed power belt drive (18, 19) and a cam drive (17) cperating the cam discs (14), in such a way that said manipulators or processing units may be rotated and arrested in the set position desired.

4. Appliance according to Claim 1 or 3, characterized in that a camshaft (15) is provided which operates the cam discs (14) and which is disposed horizontally and may be removed radially.

5. Appliance according to one of the Claims 1 to 4, characterized in that lever-linkage (22) and pushrods (23) are provided for the purpose of the transmission of movements from the cam discs (14) coordinated to the manipulators or processing units (3, 3$^I$ to 3$^{VII}$) to the operating attachments (4) which serve the supports (13) for the works mounted on the rotary table (2), the effective length of the pushrods (23) being adjustable, e.g. by mean, of adjustment screws (24), in order to bring about a change in the lift.

**Revendications:**

1. Dispositif actionné automatiquement pour l'assemblage, le mesurage, le traitement ou pareil de pièces en travail en utilisant une table tournante (2) et des manipulateurs ou unités d'usinage (3, 3$^I$, à 3$^{VII}$) qui sont commandés par disques à cames (14), la table tournante (2) étant equippée de porteurs (13) pour pièces en travail et les manipulateurs ou unites d'usinage (3, 3$^I$ à 3$^{VII}$) prévus autour de ia table tournante (2) étant placés sur une table (1), et un engrenage (5) prévu pour la commande intermittente de la table tournante (2) et pour la commande des manipulateurs ou unités d'usinage (3, 3$^I$ à 3$^{VII}$); les manipulateurs ou pièces d'usinage (3, 3$^I$ à 3$^{VII}$) étant acouplés indirectement sur une transmission par engrenages-à courroie dentée échangeable ou pareil (18,19) et la courroie dentée ou pareille (19) est formée en une seule pièce en continu qui court de préférence sur tous les manipulateurs ou unités d'usinage (3, 3$^I$ à 3$^{VII}$) characterizé par le fait que la table tournante (2) est acouplée indirectement avec l'engrenage intermittent (9) contenu'dans l'engrenage (5) sur une transmission par engrenages-à courroie dentée ou pareille (10,11,12) echangeable supplémentaire pour le changement de l'angle de pas.

2. Dispositif selon revendication 1 characterizé par le fait que la transmission par engrenages à courroie dentée (10,11,12) ou pareille est exécutée comme demultiplicateur avec tension initiale.

3. Dispositif selon revendication 1 characterizé par le fait que les manipulateurs ou unités d'usinage (3, 3$^I$ à 3$^{VII}$) sont placés sur la table (1) de manière pivotante et avec possibilité d'être fixés dans la position ajustée autour d'un arbre intermédiaire (16) qui est place verticalement entre la transmission à engrenages à courroie dentée (18,19) et une commande à cames (17) qui entraîne les disques à cames (14).

4. Dispositif selon revendication 1 ou 3 characterizé par le fait que soit prévu un arbre à cames (15) qui porte les disques à cames (14) et qui est placé de façon horizontale et radialement démontable.

5. Dispositif selon une des revendications 1 à 4 characterizé par le fait que des tiges à levier (22) et bielles (23) sont prevus pour la transmission de mouvements partant ces disques à cames (14) appartenant aux manipulateurs ou unités d'usinage (3, 3$^I$ à 3$^{VII}$) aux chapeaux de mouvement (4) qui manipulent les porteurs (13) placés sur la table tournante (2) et qui manipulent les pièces en travail; la longueur efficace des bielles (23) etant changeable p.e. par vis d'ajustage (24) pour ajuster la course.

FIG.1

FIG. 2

0 100 307

FIG. 3